(19) Europäisches Patentamt

European Patent Office

Office européen des brevets

(11) **EP 1 594 219 A2**

## (12) EUROPEAN PATENT APPLICATION
published in accordance with Art. 158(3) EPC

(43) Date of publication:
**09.11.2005 Bulletin 2005/45**

(21) Application number: **04708904.0**

(22) Date of filing: **06.02.2004**

(51) Int Cl.[7]: **H02P 1/00**

(86) International application number:
**PCT/JP2004/001277**

(87) International publication number:
**WO 2004/073152 (26.08.2004 Gazette 2004/35)**

(84) Designated Contracting States:
**AT BE BG CH CY CZ DE DK EE ES FI FR GB GR HU IE IT LI LU MC NL PT RO SE SI SK TR**
Designated Extension States:
**AL LT LV MK**

(30) Priority: **12.02.2003 JP 2003033742**

(71) Applicant: **KABUSHIKI KAISHA YASKAWA DENKI Kitakyushu-Shi, Fukuoka 806-0004 (JP)**

(72) Inventor: **YAMAMOTO, Yoichi Kitakyushu-shi, Fukuoka 806-0004 (JP)**

(74) Representative: **Grünecker, Kinkeldey, Stockmair & Schwanhäusser Anwaltssozietät Maximilianstrasse 58 80538 München (DE)**

(54) **MOTOR CONTROLLER AND OUT-OF-CONTROL DETECTING METHOD**

(57)    A problem to be solved by the present invention is to provide a motor controller capable of enhancing the safety of a crane, or the like, by accurately detecting a control deviant state within a short period of time by means of simple computation using the amount of control of a motor.

According to the present invention, a voltage and a current of an AC motor are controlled by subjecting the voltage and current to coordinate transformation along two axes "d" and "q," and detects occurrence of a control deviant state from "d" and "q" components of the voltage or current. A control deviant state is determined to have arisen when a value—which is computed on the basis of $\theta_i = \tan^{-1}(Iq/Id)$ through use of an excitation current feedback value Id which is the "d" component of the electric current and the torque current feedback value Iq which is the q component—has attained a predetermined value or more.

*FIG. 1*

**Description**

**<Field of the Invention>**

The present invention relates to a controller for detecting a control deviant state of an AC motor in a control mode which eliminates a need of a speed sensor, such as a pulse encoder, or the like.

**<Background Technique>**

In relation to a controller which drives an AC motor, speed control using a variable voltage and a variable frequency has hitherto been known. There has been put into practice a vector control mode which controls a primary current supplied to an AC motor by dividing the current into an excitation current involved directly in torque (an electric current which generates a magnetic flux) and a torque current (an electric current which generates torque). The vector control mode has already been known, and hence its explanation is omitted.

As such a sensorless controller for detecting loss-of-synchronism (a control deviant state) of the induction motor, a "sensorless controller for an induction motor" is described in, e.g., Patent Document JP-A-11-8990 (paragraphs [0014] to [0046]).

Specifically, an instantaneous spatial magnetic flux vector control method is applied to a controller which detects instantaneous primary voltages of U, V, and W phases through use of voltage sensors attached to at least two phases of the induction motor. When the angular velocity of a primary magnetic flux is accelerated to thus have exceeded a control range of the angular velocity of a rotor, slippage increases, and the induction motor fails to acquire required torque, thereby losing synchronism. On the basis of this phenomenon, when the angular velocity of the primary magnetic flux is greater than a determination value, a determination is made as to whether or not a control deviant state has been made.

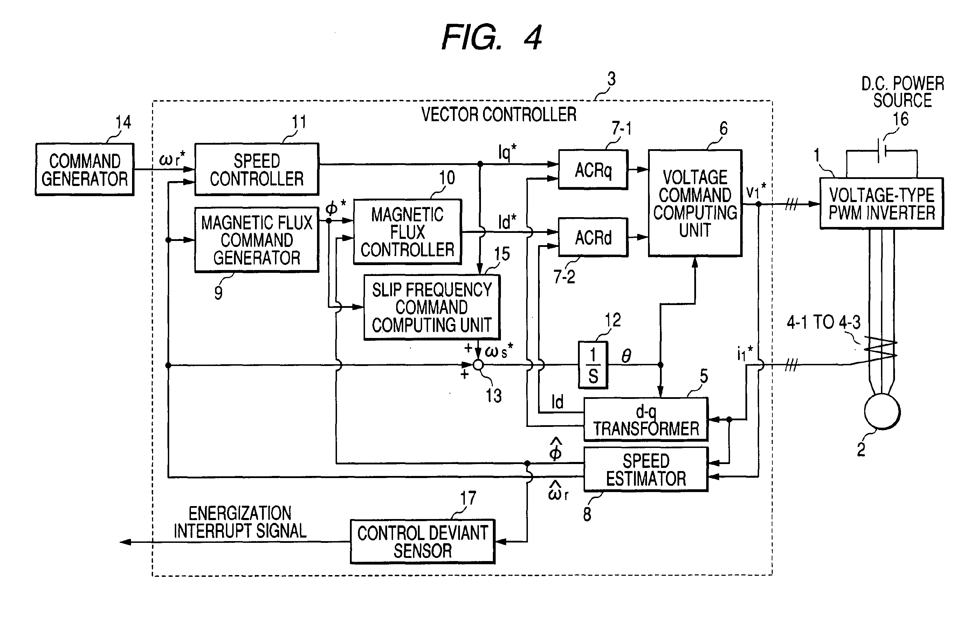

A PG-less(i.e. speed-sensor-less) vector controller shown in Fig. 4 is hitherto available as a controller for detecting a control deviant state of an AC motor in a control mode of a slip frequency which obviates a necessity for a speed sensor such as a pulse encoder or the like.

In the drawing, a voltage-type inverter 1 converts a d.c. voltage applied by a d.c. power source 16 into an a.c. voltage having an arbitrary frequency and a voltage by means of a PWM control method. An AC motor 2 is connected to a.c. output terminals of respective phases U, V, and W of the voltage-type inverter 1. The electric currents flowing through the respective phases of the AC motor 2 are detected by current sensors 4-1 to 4-3.

A vector controller 3 is provided with a d-q transformer 5 which detects a primary current of the AC motor 2 and subjects the primary current to coordinate transformation, thereby sending a torque current feedback value Iq and an excitation current feedback value Id. The vector controller 3 is further provided with a torque current control circuit (ACRq) 7-1 and an excitation current control circuit (ACRd) 7-2. The torque current control circuit takes, as a torque current command value Iq*, a value output from a speed control circuit (ASR) 11 which is provided so as to cause a speed command value $\omega$r* input from a command generator 14 to coincide with an estimated speed value $\omega$r^ output from a speed estimator 8 (a symbol immediately preceding a caret mark "^" depicts an "estimated value"; the same also applies to any counterparts in the following descriptions) ; and effects control such that the Iq* coincides with a torque current feedback value Iq output from the d-q transformer 5. The excitation current control circuit controls a voltage in the direction of an excitation current such that an excitation current command value Id* output from a magnetic flux controller 10 coincides with the excitation current feedback value Id output from the d-q transformer 5.

A circuit which compensates for an induced voltage having developed in the AC motor 2 or a counter-electromotive voltage derived from a primary resistor r1 or a leakage inductance 1 is omitted. The voltage command computing unit 6 subj ects sums (Vqref, Vdref) consisting of an output from the torque current control circuit 7-1, an output from the excitation current control circuit 7-2, and values for compensating for counter-electromotive voltages to coordinate transformation through use of the phase $\theta$ of an output from an integrator 12, thereby computing voltage commands (Vu*, Vv*, Vw*) of respective phases U, V, and W to thus yield a voltage command vector [v1] (the term in the brackets denotes a "vector, " and the same applies to any counterparts in the subsequent descriptions).

The d-q transformer 5 and the voltage command computing unit 6 perform computing operations through use of Eq. 1 and Eq. 2.

$$\begin{pmatrix} Idfb \\ Iqfb \end{pmatrix} = \begin{pmatrix} \cos\theta & \sin\theta \\ -\sin\theta & \cos\theta \end{pmatrix} \begin{pmatrix} 1 & 0 & 0 \\ 0 & \dfrac{1}{\sqrt{3}} & -\dfrac{1}{\sqrt{3}} \end{pmatrix} \begin{pmatrix} Iw \\ Iu \\ Iv \end{pmatrix} \quad \cdots \quad (1)$$

$$\begin{pmatrix} Vw* \\ Vu* \\ Vv* \end{pmatrix} = \begin{pmatrix} 1 & 0 \\ -\dfrac{1}{2} & \sqrt{3/2} \\ -\dfrac{1}{2} & -\sqrt{3/2} \end{pmatrix} \begin{pmatrix} \cos\theta & -\sin\theta \\ \sin\theta & \cos\theta \end{pmatrix} \begin{pmatrix} Vdref \\ Vqref \end{pmatrix} \quad \cdots \quad (2)$$

A slip frequency command computing unit 15 determines a slip frequency command value ωs* from an output φ* from a magnetic flux command generator 9, a torque current command value Iq*, and a set secondary resistor r2 (not shown); and adds the slip frequency command value to an estimated speed value ωr^ output from the speed estimator 8 through use of an adder 13 to thus compute a primary frequency command value ω1*, thereby computing a phase θ by way of an integrator 12.

The speed estimator 8 estimates and computes a magnetic flux φ and the speed ωr of the AC motor on the basis of the previously-described voltage command vector [v1] and the primary current vector [il]. The AC motor magnetic flux φ is determined as expressed by, e.g., Eq. (3).

$$\Phi^\wedge = |\int ([v1*] - r1 \cdot [i1] - \omega \cdot l \cdot [i1]) dt| \tag{3}$$

A control deviant sensor 17 determines whether or not a control deviant state is achieved, on the basis of behaviors of the detectedAC motor magnetic flux $\Phi^\wedge$, such as those provided below, through use of the AC motor magnetic flux $\Phi^\wedge$ determined by Eq. (3) (representing an estimated value).

1. The AC motor magnetic flux $\Phi^\wedge$ has continuallymaintained a deviation of predetermined value or more with respect to the magnetic flux command value $\Phi^*$ over a predetermined period of time or more.
2. The AC motor magnetic flux $\Phi^\wedge$ has oscillated a predetermined number of times per unit time in excess of a predetermined value.

When a control deviant state is determined to have been achieved, an energization interrupt signal is output to thus halt operation.

This determination is based on an idea that, if vector control is established, the magnitude of the AC motor magnetic flux $\Phi^\wedge$ coincides well with the command value $\Phi^*$ except for a transient state; and that, if an AC motor magnetic flux failing to satisfy such a relationship is detected, a control deviant state is determined to have been achieved.

However, according to the above-described related art, the sensorless controller of the induction motor described in Patent Document 1 suffers the problems of: not being able to be applied to a slip-frequency-type control method which takes, as an output frequency, a primary frequency determined by adding a slip frequency to an estimated speed; not being applicable to a controller not having a voltage sensor for detecting instantaneous primary voltages of U, V, and W phases; and being incapable of detecting a control deviant state in a low-speed range.

The second conventional motor controller suffers the problems of: not being applicable to a control method which does not determine an AC motor magnetic flux through computation or does not need to determine the same; requiring determination of a large number of predetermined values in order to make a determination about a control deviant state; and involving a longer detection time to prevent erroneous detection, which eventually becomes a factor for causing a suspension failure in the application where a motor used in a vertical direction as in the case of a crane.

Accordingly, the present invention aims at providing a motor controller which can be applied to a control method—which does not require a voltage sensor and does not determine an AC motor magnetic flux—and enables detection of a control deviant state without fail in a short period of time regardless of whether the motor operates in a low-speed range or a high-speed range, as well as providing a method for detecting a control deviant state.

**<Disclosure of the Invention>**

To achieve the object, the present invention 1 is characterized by providing a motor controller not using a speed sensor, such as a pulse encoder or the like, and having a control deviant sensor which controls a voltage and an electric current of an AC motor by subjecting the voltage and the current to coordinate transformation along two axes "d" and "q" and detects a control deviant state from the "d" and "q" components of the voltage or current, wherein the control deviant state sensor determines occurrence of a control deviant state when a value computed by $\theta_i = \tan^{-1}$ ($Iq/Id$) through use of an excitation current feedback value Id, which is the "d" component of the current, and a torque current feedback value Iq, which is the "q" component, has attained a predetermined value or more.

According to this motor controller, a control deviant state of the AC motor in a control mode to be performed without use of a speed sensor, such as a pulse encoder, can be detected as follows:

Namely, the torque current feedback value Iq and the excitation current feedback value Id, which are determined by subjecting the primary current vector [i1] of the AC motor to coordinate transformation through use of the control phase θ, are to be originally detected as the amount of d.c. current, so long as the control phase θ is properly controlled with respect to the AC motor phase θM. However, when the torque current feedback value Iq and the excitation current feedback value Id are detected as the amount of a.c. current so as to rotate about a d-q axis, the rotational speed corresponds to the amount of time-varying change in the AC motor phase θM and the control phase θ. Since the total amount of time-varying change corresponds to the amount of deviation of the control phase θ from an actual phase θ of the AC motor, occurrence of a control deviant state can be determined on the basis of whether or not the total amount has exceeded a predetermined value.

Further, the present invention 2 is characterized by providing a motor controller not using a speed sensor, such as a pulse encoder or the like, and having a control deviant sensor which controls a voltage and an electric current of an AC motor by subj ecting the voltage and the current to coordinate transformation along two axes "d" and "q" and detects a control deviant state from the "d" and "q" components of the voltage or current, wherein the control deviant state sensor determines occurrence of a control deviant state when a value computed by $\theta_v = \tan^{-1}(Vq^*/Vd^*)$ through use of an excitation current direction voltage command value Vd*, which is the "d" component of the voltage, and a torque current direction voltage command value Vq*, which is the "q" component, has attained a predetermined value or more.

As in the case of the present invention 1, this motor controller can detect a control deviant state of the AC motor through use of the excitation current direction voltage command value Vd* and the torque current direction voltage command value Vq* in place of Iq and Id.

The present invention 3 is characterized by providing a method for detecting the control deviant state of a motor controller which controls a voltage and an electric current of an AC motor by subjecting the voltage and the current to coordinate transformation along two axes "d" and "q" and detects a control deviant state from the "d" and "q" components of the voltage or current, wherein occurrence of a control deviant state is determined when a value computed by $\theta_i = \tan^{-1}(Iq/Id)$ through use of an excitation current feedback value Id, which is the "d" component of the current, and a torque current feedback current Iq, which is the "q" component, has attained a predetermined value or more.

According to this method for detecting a control deviant state of a motor controller, when the current feedback values Iq, Id, which are to be originally detected as the amount of d.c. current, are detected as the amount of a.c. current so as to rotate about a d-q axis, the rotational speed corresponds to the amount of time-varying change in the AC motor phase θM and the control phase θ. Since the total amount of time-varying change corresponds to the amount of deviation of the control phase θ from an actual phase θ of the AC motor, occurrence of a control deviant state can be determined on the basis of whether or not the total amount has exceeded a predetermined value.

The present invention 4 is characterized by providing a method for detecting a control deviant state of a motor controller which controls a voltage and an electric current of an AC motor by subjecting the voltage and the current to coordinate transformation along two axes "d" and "q" and detects a control deviant state from the "d" and "q" components of the voltage or current, wherein occurrence of a control deviant state is determined when a value computed by $\theta_v = \tan^{-1}(Vq^*/Vd^*)$ through use of an excitation current direction command value Vd*, which is the "d" component of the voltage, and a torque current direction voltage command value Vq*, which is the "q" component, has attained a predetermined value or more.

As in the case of the present invention 3, according to the control deviant method for this motor controller can detect a control deviant state of the AC motor through use of the excitation current direction voltage command value Vd* and the torque current direction voltage command value Vq* in place of Iq and Id.

**<Brief Description of the Drawings>**

Fig. 1 is a block diagram of a motor controller according to a first embodiment of the present invention;
Fig. 2 is a view showing an algorithm for detecting a control deviant state of the motor controller shown in Fig. 1;
Fig. 3 is a view showing an algorithm used for detecting a control deviant state of a motor controller according to a second embodiment of the present invention; and
Fig. 4 is a block diagramof a related-art motor controller.

In the drawings, reference numeral 1 designates a voltage-type PWM inverter; 2 designates anACmotor; 3 designates a vector controller; 4 designates a current sensor; 5 designates a d-q transformer; 6 designates a voltage command computing unit; 7 designates a current controller; 8 designates a speed estimator; 9 designates a magnetic flux command generator; 11 designates a speed controller; 10 designates a magnetic flux controller; 12 designates an integrator; 13 designates an adder; 14 designates a command generator; 15 designates a slip frequency command computing unit; 16 designates a d.c. power source; and 17, 17' designate control deviant sensors.

**<Best Modes for Implementing the Invention>**

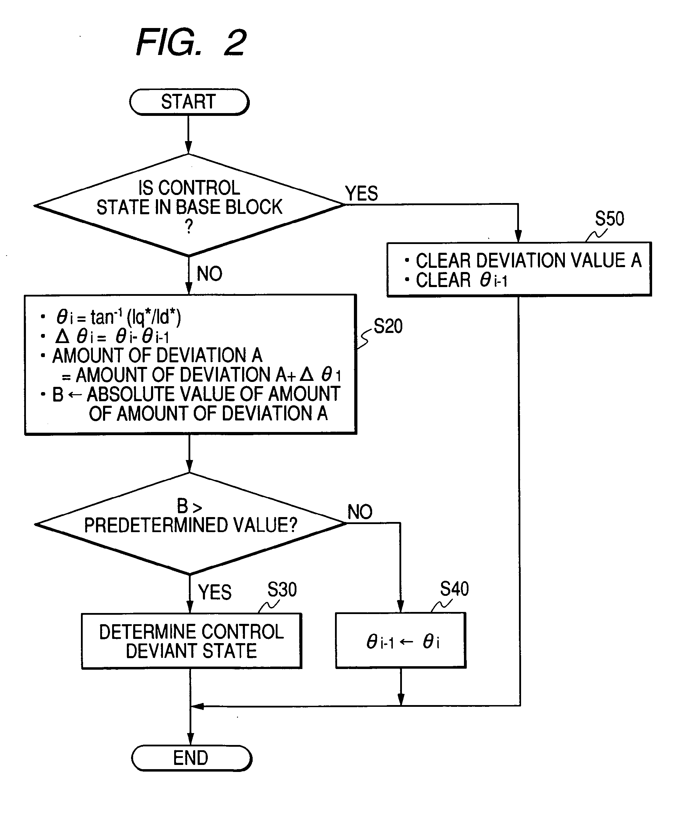

A first embodiment of the present invention will be described hereunder by reference to the drawings.

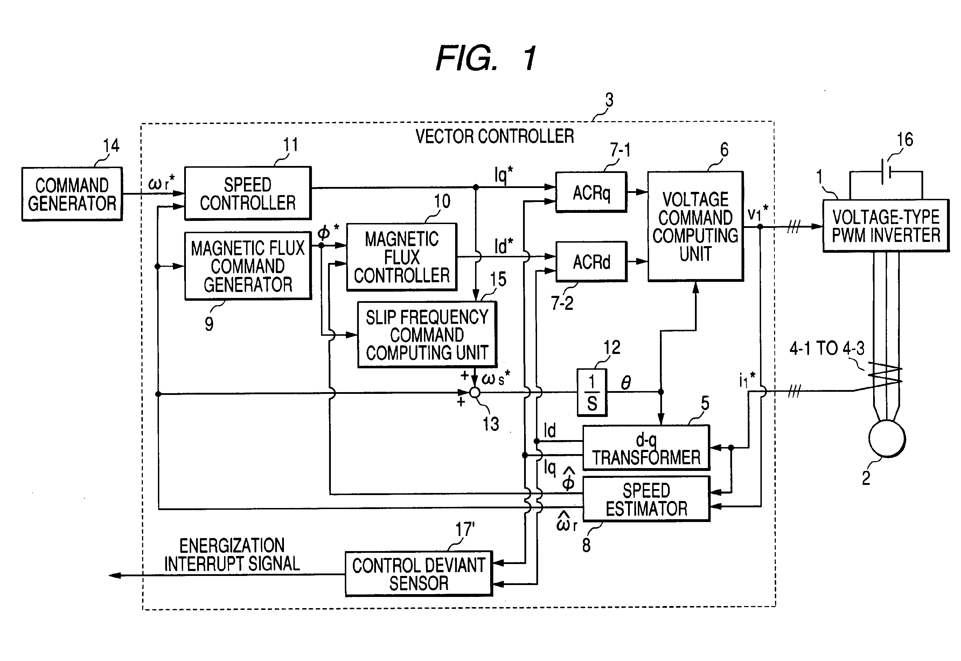

Fig. 1 is a block diagram of a motor controller according to a first embodiment of the present invention.

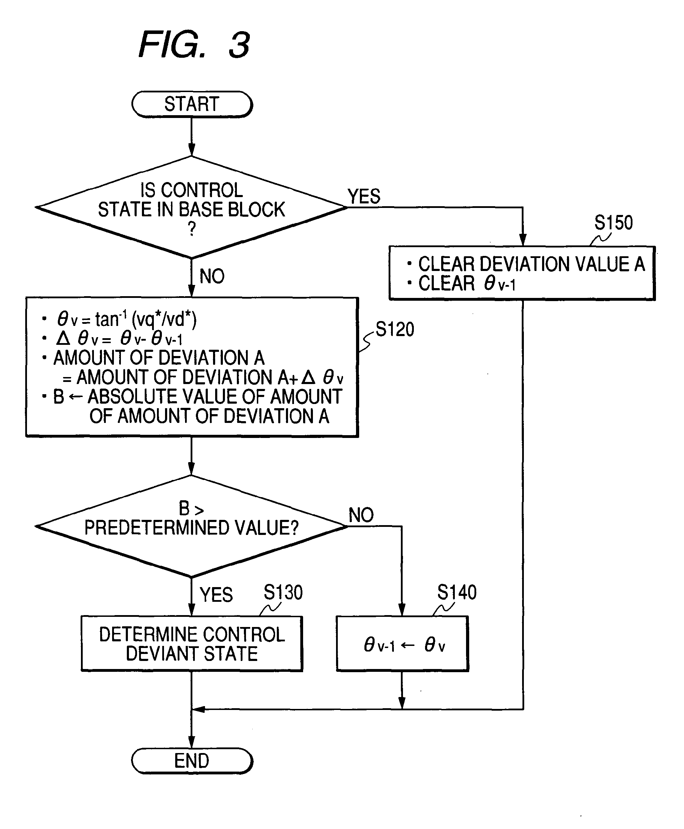

Fig. 1 is different from Fig. 3, which shows a related-art example, in that a control deviant sensor 17 is replaced by a control deviant section 17'.
The switched control deviant sensor 17' receives, as input values, a torque current feedback value Iq and an excitation current feedback value Id from a d-q transformer 5, and determines occurrence of a control deviant state by detecting occurrence of a difference between the phase of a rotating field in the AC motor; that is, an AC motor phase θM and a control phase θ output from an integrator 12.
In Fig. 1, other constituent members which are the same as those shown in Fig. 3 are assigned the same reference numerals, and repeated explanations thereof are omitted.
Operation of the motor controller will now be described.
Procedures for detecting a control deviant state will first be described through use of a detection algorithm shown in Fig. 2.
If a control state is not in a base block; that is, control is in operation, computation of the following equation is performed.

$$\theta_i = \tan^{-1}(Iq/Id)$$

The amount of change per unit time (a difference between a current value and a preceding value) is integrated (step 20). As mentioned previously, since the integrated value corresponds to a difference between the AC motor phase θM and the control phase θ, a control deviant state is determined to have arisen when the absolute value of the integrated value has attained a predetermined value or more (step 30).
If the absolute value is a predetermined value or less, θi is saved (step 40). If the control state is in the base block, a preceding value pertaining to the amount of deviation and another preceding value of θi are cleared (step 50).
The predetermined value is determined from the viewpoint of the range of values which θi can assume through normal operation and the number of times the AC motor is allowed to rotate until the motor is determined to be control deviant. In normal times, an electrical angle is set to one to two cycles (360 degrees to 720 degrees) from the latter viewpoint, and a mechanical angle is set to about one rotation or less in the case of a four-pole motor.
By means of the above operations, detection of a control deviant state can be realized.
A second embodiment of the present invention will now be described by reference to the drawings.
Fig. 3 is a view showing an algorithm used for detecting a control deviant state of a motor controller according to a second embodiment of the present invention.
The second embodiment differs from the first embodiment in that in the first embodiment computation is performed on the basis of inputs of currents Iq, Id, whereas in the second embodiment computation is performed on the basis of voltage command values Vq*, Vd*. Provided that a control deviant sensor of the second embodiment is assigned reference numeral 17" in contrast with the control deviant sensor 17' in Fig. 1, a difference between the sensors lies solely in a computation method. For this reason, a block diagram of the second embodiment is made common to Fig. 1 and no particular illustration is provided.

Operation of the motor controller will now be described.

In general, when vector control is established, Eq. (4) and Eq. (5), which are provided below, stand on the assumption that the torque current direction voltage command value Vq* coincides with an actual value Vq of the torque current direction voltage and that the excitation current direction voltage command value Vd* coincides with an actual value Vd of the excitation current direction voltage.

$$Vq^* = E + \sqrt{3} \cdot R1 \cdot Iq \cdot + \sqrt{3} \cdot \omega1 \cdot l \cdot Id + ACRq \qquad (4)$$

$$Vd^* = \sqrt{3} \cdot R1 \cdot Id - \sqrt{3} \cdot \omega1 \cdot l \cdot Iq + ACRd \qquad (5)$$

ACRq denotes a value output from the torque current control circuit (ACRq) 7-1, and ACRd denotes a value output from the excitation current control circuit (ACRd) 7-2.

If the torque current feedback value Iq and the excitation current feedback value Id assume the amount of a. c. current, the torque current direction voltage command value Vq* and the excitation current direction voltage command value Vd* also assume the amount of a.c. current, as can be seen from Eq. 4 and Eq. 5. Therefore, $\tan^{-1}(Vq^*/Vd^*)$ rotates about the d-q axis for a period of time corresponding to a change in time from θM of the AC motor to θ of the same, as does $\tan^{-1}(Iq/Id)$.

As mentioned above, a control deviant state can be detected even when $\tan^{-1}(Vq^*/Vd^*)$ is used. Hence, if $\tan^{-1}(Vq^*/Vd^*)$ is used for the control deviant sensor 17' of the first embodiment in lieu of $\tan^{-1}(Iq/Id)$, the control deviant sensor can be realized in totally the same manner.

Detection procedures of the motor controller will now be described by reference to Fig. 3.

First, if control is in effect, θv = $\tan^{-1}(Vq^*/Vd^*)$ is calculated, thereby integrating the amount of change per unit time (step 120).

When the absolute value of the integrated value has reached a predetermined value or more, a control deviant state is determined to have arisen (step 130).

If the absolute value is a predetermined value or less, θv is saved (step 140).

If the control state is in a base block by the first determination, the amount of deviation and the preceding value are cleared (step 150).

Descriptions have been provided thus far by reference to the motor controller to which the vector control method of the present invention is applied. However, Iq does not always need to be a torque current value, and Id does not always need to be an excitation current value. The present invention can be applied to any control method in totally the same manner, so long as the control method subj ects a detected primary current to coordinate transformation along a d-q axis to thus determine Id and Iq. The same also applies to Vd, Vq.

Although the controller applied to the induction motor has been described as an example of the AC motor, the present invention can be applied to a built-in magnet-type motor in totally the same manner.

**<Industrial Applicability>**

As has been described, according to the present invention, a control deviant state can be determined accurately within a short period of time by means of simple computation using the amount of control of the motor, such as an excitation current feedback value Id—which is a "d" component of an electric current—and a torque current feedback value Iq—which is a "q" component of the current—or an excitation current direction voltage command value Vd* and a torque current direction voltage command value Vq*. Hence, there is yielded an advantage of the ability to enhance the safety of, especially, a machine which operates vertically as does a crane.

**Claims**

1. A motor controller not using a speed sensor, such as a pulse encoder or the like, and having a control deviant sensor which controls a voltage and an electric current of an AC motor by subjecting said voltage and said current to coordinate transformation along two axes "d" and "q" and detects a control deviant state from said "d" and "q" components of said voltage or current, wherein
   said control deviant state sensor determines occurrence of a control deviant state when a value computed by $\theta_i = \tan^{-1}(Iq/Id)$ through use of an excitation current feedback value Id, which is said "d" component of said current, and a torque current feedback value Iq, which is said "q" component, has attained a predetermined value or more.

2. A motor controller not using a speed sensor, such as a pulse encoder or the like, and having a control deviant sensor which controls a voltage and an electric current of an AC motor by subjecting said voltage and said current to coordinate transformation along two axes "d" and "q" and detects a control deviant state from said "d" and "q" components of said voltage or current, wherein

said control deviant state sensor determines occurrence of a control deviant state when a value computed by $\theta_v = \tan^{-1}(Vq^*/Vd^*)$ through use of an excitation current direction voltage command value Vd*, which is said "d" component of said voltage, and a torque current direction voltage command value Vq*, which is said "q" component, has attained a predetermined value or more.

3. A method for detecting control deviant state of a motor controller which controls a voltage and an electric current of an AC motor by subjecting said voltage and said current to coordinate transformation along two axes "d" and "q" and detects a control deviant state from said "d" and "q" components of said voltage or current, wherein

occurrence of a control deviant state is determined when a value computed by $\theta_i = \tan^{-1}(Iq/Id)$ through use of an excitation current feedback value Id, which is said "d" component of said current, and a torque current feedback value Iq, which is said "q" component, has attained a predetermined value or more.

4. A method for detecting control deviant state of a motor controller which controls a voltage and an electric current of an AC motor by subjecting said voltage and said current to coordinate transformation along two axes "d" and "q" and detects a control deviant state from said "d" and "q" components of said voltage or current, wherein

occurrence of a control deviant state is determined when a value computed by $\theta_v = \tan^{-1}(Vq^*/Vd^*)$ through use of an excitation current direction voltage command value Vd*, which is said "d" component of said voltage, and a torque current direction voltage command value Vq*, which is said "q" component, has attained a predetermined value or more.

FIG. 1

EP 1 594 219 A2

# FIG. 2

START

IS CONTROL
STATE IN BASE BLOCK
?

YES → 

NO ↓

S50
- CLEAR DEVIATION VALUE A
- CLEAR $\theta_{i-1}$

S20
- $\theta_i = \tan^{-1}(lq^*/ld^*)$
- $\Delta\theta_i = \theta_i - \theta_{i-1}$
- AMOUNT OF DEVIATION A
  = AMOUNT OF DEVIATION A + $\Delta\theta_1$
- B ← ABSOLUTE VALUE OF AMOUNT
  OF AMOUNT OF DEVIATION A

B >
PREDETERMINED VALUE?     NO →

YES ↓          S30                    S40

DETERMINE CONTROL
DEVIANT STATE

$\theta_{i-1} \leftarrow \theta_i$

END

# FIG. 3

START

IS CONTROL STATE IN BASE BLOCK ? — YES → 

$\sim$S150

- CLEAR DEVIATION VALUE A
- CLEAR $\theta_{v-1}$

NO

- $\theta_v = \tan^{-1}(vq^*/vd^*)$
- $\Delta\theta_v = \theta_v - \theta_{v-1}$
- AMOUNT OF DEVIATION A = AMOUNT OF DEVIATION A+$\Delta\theta_v$
- B ← ABSOLUTE VALUE OF AMOUNT OF AMOUNT OF DEVIATION A

$\sim$S120

B > PREDETERMINED VALUE? — NO →

$\sim$S140

$\theta_{v-1} \leftarrow \theta_v$

YES   S130

DETERMINE CONTROL DEVIANT STATE

END

FIG. 4